# EUROPEAN PATENT APPLICATION

(11) **EP 3 492 299 A1**
(43) Date of publication of application: **05.06.2019**
(21) Application number: 17833451.2
(22) Date of filing: 17.07.2017
(51) Int. Cl.: B60L 1/00, H02M 7/00

(54) **ELECTRIC CAR, MULTI-FUNCTIONAL IN-VEHICLE CHARGER OF ELECTRIC CAR, AND CONTROL METHOD FOR SAME**

(30) Priority: 28.07.2016 CN 201610614733
(71) Applicant: BYD Company Limited, Shenzhen 518118 (CN)
(72) Inventor: TENG, Jingcui, Shenzhen Guangdong 518118 (CN); YANG, Shiqing, Shenzhen Guangdong 518118 (CN)
(74) Representative: Ziebig & Hengelhaupt Patentanwälte PartG mbB
(86) International application number: PCT/CN2017/093203
(87) International publication number: WO 2018/019148

(57) **Abstract**

An electric vehicle, a multifunctional car charger therefor and a control method thereof. The charger includes: a bidirectional AC/DC conversion circuit, a first and a second DC/DC conversion circuit, a sampling circuit and a control module. The sampling circuit samples a voltage and a current of a power grid, a voltage of the direct-current end of the bidirectional AC/DC conversion circuit, a voltage and a current of the power battery and a voltage and a current of the low-voltage battery respectively; and the control module is configured to control the bidirectional AC/DC conversion circuit, the first DC/DC conversion circuit and the second DC/DC conversion circuit according to the sampling result of the sampling circuit, to realize any one of a power battery charging function, a low-voltage battery charging function, a power battery alternating-current inversion function, a low-voltage battery alternating-current inversion function and a power battery low-voltage loaded output function.

## Description

### FIELD

The present invention relates to the field of electric vehicle technologies, and in particular to a multifunctional car charger for an electric vehicle, an electric vehicle and a control method of a multifunctional car charger for an electric vehicle.

### BACKGROUND

Electric vehicles are gradually favored by consumers because of their advantages such as energy saving and environmental friendliness.

At present, the car charger in an electric vehicle generally only has the function of charging the power battery, and the function is relatively simple. The implementation of other charging and powering functions of electric vehicles (such as charging for low-voltage batteries, etc.) requires additional circuits and interfaces, which undoubtedly increases the volume and weight of electric vehicle electrical equipment and increases design and manufacturing costs.

### SUMMARY

The present invention aims to solve at least one of the technical problems in the above-mentioned technology to some extent. Accordingly, the present invention is first directed to a multifunctional car charger for an electric vehicle, which is small in volume and weight, low in cost and capable of conveniently realizing multiple functions.

The present invention is secondly directed to an electric vehicle.

The present invention is thirdly directed to a control method of a multifunctional car charger for an electric vehicle.

To achieve the above objects, an embodiment of the first aspect of the present invention provides a multifunctional car charger for an electric vehicle, including: a bidirectional AC/DC conversion circuit, where an alternating-current end of the bidirectional AC/DC conversion circuit is configured for coupling to a power grid; a first DC/DC conversion circuit, where a first direct-current end of the first DC/DC conversion circuit is connected to a direct-current end of the bidirectional AC/DC conversion circuit, and a second direct-current end of the first DC/DC conversion circuit is configured for coupling to a power battery of the electric vehicle; a second DC/DC conversion circuit, where a first direct-current end of the second DC/DC conversion circuit is separately connected to a direct-current end of the bidirectional AC/DC conversion circuit and the first direct-current end of the first DC/DC conversion circuit, and a second direct-current end of the second DC/DC conversion circuit is configured for coupling to a low-voltage battery of the electric vehicle; a sampling circuit, where the sampling circuit is configured to sample a voltage and a current of the power grid, a voltage of the direct-current end of the bidirectional AC/DC conversion circuit, a voltage and a current of the power battery and a voltage and a current of the low-voltage battery separately; and a control module, in which a first control circuit for controlling the bidirectional AC/DC conversion circuit, a second control circuit for controlling the first DC/DC conversion circuit and a third control circuit for controlling the second DC/DC conversion circuit are integrated, where the control module is configured to correspondingly control the bidirectional AC/DC conversion circuit, the first DC/DC conversion circuit and the second DC/DC conversion circuit through the first control circuit, the second control circuit and the third control circuit according to the voltage and the current of the power grid, the voltage of the direct-current end of the bidirectional AC/DC conversion circuit, the voltage and the current of the power battery and the voltage and the current of the low-voltage battery that are sampled by the sampling circuit, to realize any one of a power battery charging function, a low-voltage battery charging function, a power battery alternating-current inversion function, a low-voltage battery alternating-current inversion function and a power battery low-voltage loaded output function.

According to the multifunctional car charger for an electric vehicle of the embodiment of the present invention, the bidirectional AC/DC conversion circuit, the first DC/DC conversion circuit and the second DC/DC conversion circuit are integrated, related voltage and current parameters in the car charger circuit are sampled by the sampling circuit, and the bidirectional AC/DC conversion circuit, the first DC/DC conversion circuit and the second DC/DC conversion circuit are controlled by the control module according to the related voltage and current parameters to realize multiple functions. In this way, through the highly integrated design, some circuits and ports can be multiplexed under different functions, so that the multifunctional car charger is small in volume and weight, low in cost and capable of conveniently realizing multiple functions. In addition, based on the above design, the charging and discharging efficiency can be improved, the charging power can be expanded conveniently, the reliability can be improved, and the service life can be prolonged.

To achieve the above objects, an embodiment of the second aspect of the present invention provides an electric vehicle, including the multifunctional car charger for an electric vehicle provided by the embodiment of the first aspect of the present invention.

According to the electric vehicle of the embodiment of the present invention, the car charger has a highly integrated design, so that some circuits and ports can be multiplexed under different functions, so that the car charger is small in volume and weight, low in cost and capable of conveniently realizing multiple functions.

To achieve the above objects, an embodiment of the third aspect of the present invention provides a control method of a multifunctional car charger for an electric vehicle, where the multifunctional car charger for an electric vehicle includes a bidirectional AC/DC conversion circuit, a first DC/DC conversion circuit and a second DC/DC conversion circuit, an alternating-current end of the bidirectional AC/DC conversion circuit is configured for coupling to a power grid, a first direct-current end of the first DC/DC conversion circuit is connected to a direct-current end of the bidirectional AC/DC conversion circuit, a second direct-current end of the first DC/DC conversion circuit is configured for coupling to a power battery of the electric vehicle, a first direct-current end of the second DC/DC conversion circuit is separately connected to a direct-current end of the bidirectional AC/DC conversion circuit and the first direct-current end of the first DC/DC conversion circuit, and a second direct-current end of the second DC/DC conversion circuit is configured for coupling to a low-voltage battery of the electric vehicle, the method including the following steps: sampling a voltage and a current of the power grid, a voltage of the direct-current end of the bidirectional AC/DC conversion circuit, a voltage and a current of the power battery and a voltage and a current of the low-voltage battery separately; and controlling the bidirectional AC/DC conversion circuit, the first DC/DC conversion circuit and the second DC/DC conversion circuit according to the voltage and the current of the power grid, the voltage of the direct-current end of the bidirectional AC/DC conversion circuit, the voltage and the current of the power battery and the voltage and the current of the low-voltage battery that are sampled, to realize any one of a power battery charging function, a low-voltage battery charging function, a power battery alternating-current inversion function, a low-voltage battery alternating-current inversion function and a power battery low-voltage loaded output function.

According to the control method of the multifunctional car charger for an electric vehicle of the embodiment of the present invention, the car charger integrates the bidirectional AC/DC conversion circuit, the first DC/DC conversion circuit and the second DC/DC conversion circuit, related voltage and current parameters in the car charger circuit are sampled, and the bidirectional AC/DC conversion circuit, the first DC/DC conversion circuit and the second DC/DC conversion circuit are controlled according to the related voltage and current parameters to realize multiple functions. In this way, through the highly integrated design, some circuits and ports can be multiplexed under different functions, so that the car charger is small in volume and weight, low in cost and capable of conveniently realizing multiple functions. In addition, based on the above control method, the charging and discharging efficiency of the car charger can be improved, the charging power can be expanded conveniently, the reliability of the car charger can be improved, and the service life of the car charger can be prolonged.

The additional aspects and advantages of the present invention will be set forth in part in the description which follows, parts of which will become apparent from the description below, or will be understood by the practice of the present invention.

### BRIEF DESCRIPTION OF THE DRAWINGS

FIG. 1 is a block diagram of a multifunctional car charger for an electric vehicle according to an embodiment of the present invention;
FIG. 2 is a circuit diagram of a multifunctional car charger for an electric vehicle according to one embodiment of the present invention;
FIG. 3 is a structure diagram of a sampling circuit and a control module of a multifunctional car charger for an electric vehicle according to one embodiment of the present invention;
FIG. 4 is a block diagram of an electric vehicle according to an embodiment of the present invention;
FIG. 5 is a flow chart of a control method of a multifunctional car charger for an electric vehicle according to an embodiment of the present invention; and
FIG. 6 is a flow chart of a control method of a multifunctional car charger for an electric vehicle according to one specific embodiment of the present invention.

### DETAILED DESCRIPTION

The following describes in detail embodiments of the present invention. Examples of the embodiments are shown in the accompanying drawings, where reference signs that are the same or similar throughout the specification represent same or similar components or components that have same or similar functions. The following embodiments described with reference to the accompanying drawings are exemplary, which are used only to explain the present invention, and cannot be construed as a limitation to the present invention.

Hereinafter, an electric vehicle, a multifunctional car charger for an electric vehicle and a control method thereof provided by the embodiments of the present invention will be described with reference to the accompanying drawings.

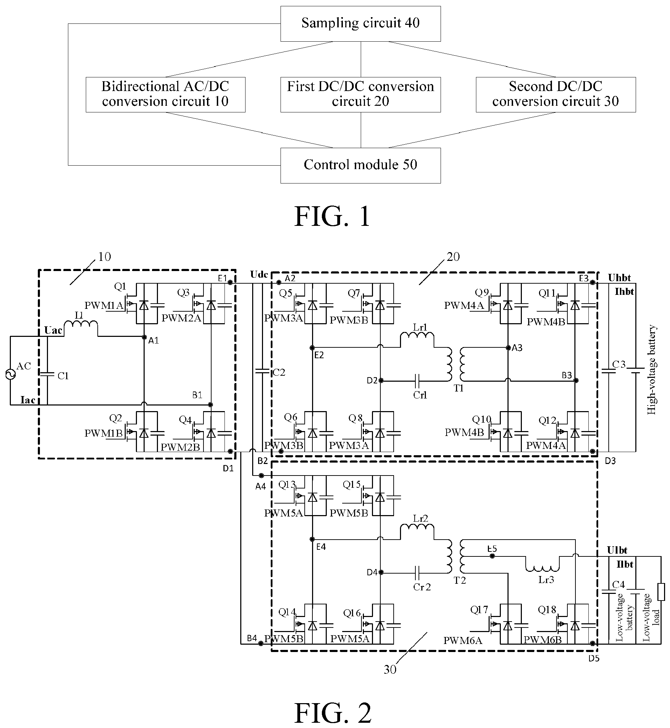

FIG. 1 is a block diagram of a multifunctional car charger for an electric vehicle according to an embodiment of the present invention.

As shown in FIG. 1, the multifunctional car charger for an electric vehicle of an embodiment of the present invention includes a bidirectional AC/DC conversion circuit 10, a first DC/DC conversion circuit 20, a second DC/DC conversion circuit 30, a sampling circuit 40 and a control module 50.

Referring to FIG. 2, an alternating-current end of the bidirectional AC/DC conversion circuit 10 is configured for coupling to a power grid, i.e. an AC power source. A first direct-current end of the first DC/DC conversion circuit 20 is coupled to a direct-current end of the bidirectional AC/DC conversion circuit 10, and a second direct-current end of the first DC/DC conversion circuit 20 is configured for coupling to a power battery of the electric vehicle. A first direct-current end of the second DC/DC conversion circuit 30 is coupled to a direct-current end of the bidirectional AC/DC conversion circuit 10 and also coupled to the first direct-current end of the first DC/DC conversion circuit 20, and a second direct-current end of the second DC/DC conversion circuit 30 is configured for coupling to a low-voltage battery of the electric vehicle.

Referring to FIG. 2, the bidirectional AC/DC conversion circuit 10 may include a first bridge circuit, and the first bridge circuit includes a first bridge arm and a second bridge arm connected in parallel. The first bridge arm includes a first switch tube Q1 and a second switch tube Q2 connected in series as a source and a drain. The second bridge arm includes a third switch tube Q3 and a fourth switch tube Q4 connected in series as a source and a drain. A node A1 between the first switch tube Q1 and the second switch tube Q2 and a node B1 between the third switch tube Q3 and the fourth switch tube Q4 serve as the alternating-current ends of the bidirectional AC/DC conversion circuit 10, and two end nodes E1 and D1 of the first bridge arm and the second bridge arm connected in parallel serve as the direct-current ends of the bidirectional AC/DC conversion circuit 10. The bidirectional AC/DC conversion circuit 10 may further include a first capacitor C1 connected in parallel to the AC power source and a first inductor L1 connected in series in the path formed by the nodes A1 and B1 and the first capacitor C1, so that filtering can be performed by the first capacitor C1 and the first inductor L1.

Referring to FIG. 2, the first DC/DC conversion circuit 20 may include a second bridge circuit, a first transformer T1 and a third bridge circuit connected in cascade. The second bridge circuit includes a third bridge arm and a fourth bridge arm connected in parallel. The third bridge arm includes a fifth switch tube Q5 and a sixth switch tube Q6 connected in series as a source and a drain. The fourth bridge arm includes a seventh switch tube Q7 and an eighth switch tube Q8 connected in series as a source and a drain. Two ends A2 and B2 of the third bridge arm and the fourth bridge arm connected in parallel serve as the first direct-current ends of the first DC/DC conversion circuit 20. A second capacitor C2 is also connected between the nodes E1 and D1 of the first bridge circuit (and also between the nodes A2 and B2 of the second bridge circuit). A node E2 between the fifth switch tube Q5 and the sixth switch tube Q6 is connected to a first terminal on the first side of the transformer T1 through a second inductor Lr1, and a node D2 between the seventh switch tube Q7 and the eighth switch tube Q8 is connected to a second terminal on the first side of the transformer T1 through a third capacitor Cr1. The third bridge circuit includes a fifth bridge arm and a sixth bridge arm connected in parallel. The fifth bridge arm includes a ninth switch tube Q9 and a tenth switch tube Q10 connected in series as a source and a drain. The sixth bridge arm includes an eleventh switch tube Q11 and a twelfth switch tube Q12 connected in series as a source and a drain. Two ends E3 and D3 of the fifth bridge arm and the sixth bridge arm connected in parallel serve as the second direct-current ends of the first DC/DC conversion circuit 20. A node A3 between the ninth switch tube Q9 and the tenth switch tube Q10 is connected to a third terminal of the second side of the transformer T1, and a node B3 between the eleventh switch tube Q11 and the twelfth switch tube Q12 is connected to a fourth terminal on the second side of the transformer T1. In one embodiment of the present invention, a fourth capacitor C3 connected in parallel to the power battery may also be included at the second direct-current end of the first DC/DC conversion circuit 20.

Referring to FIG. 2, the second DC/DC conversion circuit 30 may include a fourth bridge circuit, a second transformer T2 and a fifth bridge circuit connected in cascade. The fourth bridge circuit includes a seventh bridge arm and an eighth bridge arm connected in parallel. The seventh bridge arm includes a thirteenth switch tube Q13 and a fourteenth switch tube Q14 connected in series as a source and a drain. The eighth bridge arm includes a fifteenth switch tube Q15 and a sixteenth switch tube Q16 connected in series as a source and a drain. Two ends A4 and B4 of the seventh bridge arm and the eighth bridge arm connected in parallel serve as the first direct-current ends of the second DC/DC conversion circuit 30. A node E4 between the thirteenth switch tube Q13 and the fourteenth switch tube Q14 is connected to a fifth terminal of the first side of the transformer T2 through a third inductor Lr2, and a node D4 between the fifteenth switch tube Q15 and the sixteenth switch tube Q16 is connected to a sixth terminal of the first side of the transformer T2 through a fifth capacitor Cr2. The fifth bridge circuit includes a seventeenth switch tube Q17 and an eighteenth switch tube Q18 connected in series as a source and a drain, one end of the seventeenth switch tube Q17 is connected to a seventh terminal of the second side of the transformer T2, one end of the eighteenth switch tube Q18 is connected to an eighth terminal of the second side of the transformer T2, the other end of the seventeenth switch tube Q17 and the other end of the eighteenth switch tube Q18 are commonly connected to a node D5, and D5 and a ninth terminal (node E5) on the second side of the transformer T2 form the second direct-current ends of the second DC/DC conversion circuit 30 to obtain a divided voltage output. In one embodiment of the present invention, filtering may also be performed at the second direct-current end of the second DC/DC conversion circuit 30 by a filter circuit including a fourth inductor Lr3 and a sixth capacitor C4.

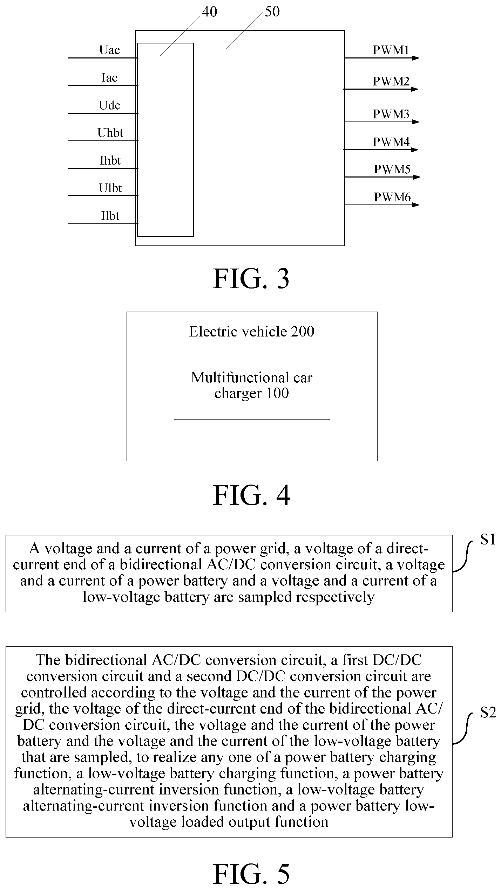

As shown in FIG. 3, the sampling circuit 40 can be integrated in the control module 50. Referring to FIG. 2 and FIG. 3, the sampling circuit 40 may be configured to sample a voltage Uac and a current lac of a power grid, a voltage of the direct-current end of the bidirectional AC/DC conversion circuit 10, a voltage Uhbt and a current Ihbt of the power battery and a voltage Ulbt and a current Ilbt of the low-voltage battery separately.

A first control circuit for controlling the bidirectional AC/DC conversion circuit 10, a second control circuit for controlling the first DC/DC conversion circuit 20 and a third control circuit for controlling the second DC/DC conversion circuit 30 are integrated in the control module 50, and the control module 50 is configured to correspondingly control the bidirectional AC/DC conversion circuit 10, the first DC/DC conversion circuit 20 and the second DC/DC conversion circuit 30 through the first control circuit, the second control circuit and the third control circuit according to the voltage lac and the current lac of the power grid, the voltage Udc of the direct-current end of the bidirectional AC/DC conversion circuit 10, the voltage Uhbt and the current Ihbt of the power battery and the voltage Ulbt and the current Ilbt of the low-voltage battery that are sampled by the sampling circuit 40. Specifically, for example, pulse-width modulation signals PWM1 to PWM6 can be output to the control electrodes (gates) of the switch tubes Q1-Q18 to control the on/off of the switch tubes, thereby realizing any one of a power battery charging function, a low-voltage battery charging function, a power battery alternating-current inversion function, a low-voltage battery alternating-current inversion function and a power battery low-voltage loaded output function.

In one embodiment of the present invention, the control module 50 is configured to correspondingly control the bidirectional AC/DC conversion circuit 10, the first DC/DC conversion circuit 20 and the second DC/DC conversion circuit 30 through the first control circuit, the second control circuit and the third control circuit according to the voltage Uac and the current lac of the power grid, the voltage Udc of the direct-current end of the bidirectional AC/DC conversion circuit 10, the voltage Uhbt and the current Ihbt of the power battery and the voltage Ulbt and the current Ilbt of the low-voltage battery that are sampled by the sampling circuit 40, to realize the power battery charging function and the low-voltage battery charging function, or the power battery alternating-current inversion function and the power battery low-voltage loaded output function, or the power battery alternating-current inversion function and the low-voltage battery alternating-current inversion function.

In an embodiment of the present invention, the first switch tube Q1 to the eighteenth switch tube Q18 may be all insulated gate bipolar transistors (IGBTs) or metal-oxide-semiconductor field effect transistors (MOSFETs). Between the source and the drain of each of the switch tubes Q1 to Q18, a diode and a capacitor may be connected in parallel. The first switch tube Q1 to the eighteenth switch tube Q18 in FIG. 2 may be correspondingly controlled by the PWM1-PWM6 signals output by the control module 50 in FIG. 3 respectively. For a specific correspondence, refer to FIG. 2 and FIG. 3, and details are not described herein. Referring to FIG. 2, the second bridge circuit, the third bridge circuit and the fourth bridge circuit may respectively adopt the manner that two switch tubes are synchronously turned on, which can reduce the conduction loss.

In one embodiment of the present invention, when the multifunctional car charger is in a charging state, if the level of the low-voltage battery is less than a first preset value, the control module 50 controls the bidirectional AC/DC conversion circuit 10 and the second DC/DC conversion circuit 30 to charge the low-voltage battery; and if the level of the low-voltage battery is greater than or equal to the first preset value, and when the power battery is in a not fully-charged state, the control module 50 controls the bidirectional AC/DC conversion circuit 10, the first DC/DC conversion circuit 20 and the second DC/DC conversion circuit 30 to respectively supply power to a low-voltage load of the electric vehicle and charge the power battery. When the multifunctional car charger is in a charging state, the control module 50 further determines whether the power battery and the low-voltage battery are abnormal, and controls the multifunctional car charger to stop charging when the power battery and the low-voltage battery are abnormal.

In one embodiment of the present invention, when the multifunctional car charger is in a discharging state, the control module 50 determines whether the electric vehicle is in a running state, if the electric vehicle is in the running state, the control module 50 controls the first DC/DC conversion circuit 20 and the second DC/DC conversion circuit 30 to supply power to the low-voltage load of the electric vehicle through the power battery, and controls the bidirectional AC/DC conversion circuit 10 to operate when receiving an alternating-current discharge demand instruction such that the power battery performs alternating-current discharge simultaneously through the first DC/DC conversion circuit 20 and the bidirectional AC/DC conversion circuit 10.

When the multifunctional car charger is in the discharging state and the electric vehicle is in a stop state, and if the control module 50 receives the alternating-current discharge demand instruction, whether the level of the low-voltage battery is less than the first preset value is determined, if the level of the low-voltage battery is less than the first preset value, the control module 50 controls the first DC/DC conversion circuit 20 and the second DC/DC conversion circuit 30 to charge the low-voltage battery through the power battery, and controls the bidirectional AC/DC conversion circuit 10 to operate such that the power battery performs alternating-current discharge simultaneously through the first DC/DC conversion circuit 20 and the bidirectional AC/DC conversion circuit 10; and if the level of the low-voltage battery is greater than or equal to the first preset value, the control module controls the first DC/DC conversion circuit 20, the second DC/DC conversion circuit 30 and the bidirectional AC/DC conversion circuit 10 such that the power battery and the low-voltage battery simultaneously perform alternating-current discharge.

It should be noted that the power of the bidirectional AC/DC conversion circuit 10, the first DC/DC conversion circuit 20 and the second DC/DC conversion circuit 30 also needs to meet specific charging and discharging demands. Specifically, when the multifunctional car charger is in a charging state, for example, the rated power of the bidirectional AC/DC conversion circuit 10 is Pw, the rated power of the first DC/DC conversion circuit 20 is Pd1 and the rated power of the second DC/DC conversion circuit 30 is Pd2, and it is assumed that the conversion efficiency of the circuit is approximately 1, then, when the high-voltage battery (power battery) and the low-voltage battery are simultaneously charged, the bidirectional AC/DC conversion circuit 10, the first DC/DC conversion circuit 20 and the second DC/DC conversion circuit 30 can be controlled to operate simultaneously, at this time, Pw=Pd1+Pd2. When only the high-voltage battery is charged, the bidirectional AC/DC conversion circuit 10 and the first DC/DC conversion circuit 20 are controlled to operate, and the second DC/DC conversion circuit 30 does not operate, Pw=Pd1. When only the low-voltage battery is charged, the bidirectional AC/DC conversion circuit 10 and the second DC/DC conversion circuit 30 are controlled to operate, and the first DC/DC conversion circuit 20 does not operate, Pw=Pd2.

When the multifunctional car charger is in a discharging state, for example, the rated power of the bidirectional AC/DC conversion circuit 10 is Pw0, the rated power of the first DC/DC conversion circuit 20 is PdlO and the rated power of the second DC/DC conversion circuit 30 is Pd20, and it is assumed that the conversion efficiency of the circuit is approximately 1, then, when the electric vehicle is in a stop state, alternating-current discharge is performed and the low voltage battery is not under voltage, the bidirectional AC/DC conversion circuit 10, the first DC/DC conversion circuit 20 and the second DC/DC conversion circuit 30 simultaneously operate, Pw0=Pd10+Pd20, and at this time, the power of the alternating-current discharge can reach the maximum value. When the electric vehicle is in a stop state, alternating-current discharge is performed and the low-voltage battery is under voltage, the bidirectional AC/DC conversion circuit 10, the first DC/DC conversion circuit 20 and the second DC/DC conversion circuit 30 simultaneously operate, and the low-voltage battery is charged and absorbs power, Pw0=Pd10-Pd20. During the running of the vehicle, the vehicle low-voltage battery and the low-voltage load power supply should be first ensured, and if there is a discharge demand, the order of starting is determined according to the obtained power battery, low-voltage battery, power grid and control signal information. When the electric vehicle is in a running state and alternating-current discharge is performed, the bidirectional AC/DC conversion circuit 10, the first DC/DC conversion circuit 20 and the second DC/DC conversion circuit 30 simultaneously operate, Pw0=Pd10-Pd20. When the electric vehicle is in the running state and alternating-current discharge is not performed, only the first DC/DC conversion circuit 20 and the second DC/DC conversion circuit 30 operate, Pd10=Pd20.

According to the multifunctional car charger for an electric vehicle of the embodiment of the present invention, the bidirectional AC/DC conversion circuit, the first DC/DC conversion circuit and the second DC/DC conversion circuit are integrated, related voltage and current parameters in the car charger circuit are sampled by the sampling circuit, and the bidirectional AC/DC conversion circuit, the first DC/DC conversion circuit and the second DC/DC conversion circuit are controlled by the control module according to the related voltage and current parameters to realize multiple functions. In this way, through the highly integrated design, some circuits and ports can be multiplexed under different functions, so that the car charger is small in volume and weight, low in cost and capable of conveniently realizing multiple functions. In addition, based on the above design, the charging and discharging efficiency of the car charger can be improved, the charging power can be expanded conveniently, the reliability of the car charger can be improved, and the service life of the car charger can be prolonged.

Corresponding to the above embodiments, the present invention further provides an electric vehicle.

As shown in FIG. 4, the electric vehicle 200 of the embodiment of the present invention includes the multifunctional car charger 100 for an electric vehicle provided by the above embodiment of the present invention. For more specific implementations, refer to the above embodiments. To avoid redundancy, details are not described herein again.

According to the electric vehicle of the embodiment of the present invention, the car charger has a highly integrated design, so that some circuits and ports can be multiplexed under different functions, so that the car charger is small in volume and weight, low in cost and capable of conveniently realizing multiple functions.

Corresponding to the above embodiments, the present invention also provides a control method of a multifunctional car charger for an electric vehicle.

The multifunctional car charger for an electric vehicle includes a bidirectional AC/DC conversion circuit, a first DC/DC conversion circuit and a second DC/DC conversion circuit, an alternating-current end of the bidirectional AC/DC conversion circuit is configured for coupling to a power grid, a first direct-current end of the first DC/DC conversion circuit is coupled to a direct-current end of the bidirectional AC/DC conversion circuit, a second direct-current end of the first DC/DC conversion circuit is configured for coupling to a power battery of the electric vehicle, a first direct-current end of the second DC/DC conversion circuit is separately coupled to a direct-current end of the bidirectional AC/DC conversion circuit and the first direct-current end of the first DC/DC conversion circuit, and a second direct-current end of the second DC/DC conversion circuit is configured for coupling to a low-voltage battery of the electric vehicle. For a more specific circuit coupling manner, refer to FIG. 2 and the above embodiments, and details are not described herein.

As shown in FIG. 5, the control method of the multifunctional car charger for an electric vehicle of the embodiment of the present invention includes the following steps:
S1: A voltage and a current of the power grid, a voltage of the direct-current end of the bidirectional AC/DC conversion circuit, a voltage and a current of the power battery and a voltage and a current of the low-voltage battery are sampled respectively.
S2: The bidirectional AC/DC conversion circuit, the first DC/DC conversion circuit and the second DC/DC conversion circuit are controlled according to the voltage and the current of the power grid, the voltage of the direct-current end of the bidirectional AC/DC conversion circuit, the voltage and the current of the power battery and the voltage and the current of the low-voltage battery that are sampled, to realize any one of a power battery charging function, a low-voltage battery charging function, a power battery alternating-current inversion function, a low-voltage battery alternating-current inversion function and a power battery low-voltage loaded output function.

In one embodiment of the present invention, the bidirectional AC/DC conversion circuit, the first DC/DC conversion circuit and the second DC/DC conversion circuit may also be controlled according to the voltage and the current of the power grid, the voltage of the direct-current end of the bidirectional AC/DC conversion circuit, the voltage and the current of the power battery and the voltage and the current of the low-voltage battery that are sampled, to realize the power battery charging function and the low-voltage battery charging function, or the power battery alternating-current inversion function and the power battery low-voltage loaded output function, or the power battery alternating-current inversion function and the low-voltage battery alternating-current inversion function.

In one embodiment of the present invention, when the multifunctional car charger is in a charging state, and if the level of the low-voltage battery is less than a first preset value, the bidirectional AC/DC conversion circuit and the second DC/DC conversion circuit are controlled to charge the low-voltage battery; and if the level of the low-voltage battery is greater than or equal to the first preset value, and when the power battery is in a not fully-charged state, the bidirectional AC/DC conversion circuit, the first DC/DC conversion circuit and the second DC/DC conversion circuit are controlled to respectively supply power to a low-voltage load of the electric vehicle and charge the power battery.

In one embodiment of the present invention, when the multifunctional car charger is in a charging state, whether the power battery and the low-voltage battery are abnormal is further determined, and the multifunctional car charger is controlled to stop charging when the power battery and the low-voltage battery are abnormal.

In one embodiment of the present invention, when the multifunctional car charger is in a discharging state, whether the electric vehicle is in a running state is further determined, if the electric vehicle is in the running state, the first DC/DC conversion circuit and the second DC/DC conversion circuit are controlled to supply power to the low-voltage load of the electric vehicle through the power battery, and the bidirectional AC/DC conversion circuit is controlled to operate when receiving an alternating-current discharge demand instruction such that the power battery performs alternating-current discharge simultaneously through the first DC/DC conversion circuit and the bidirectional AC/DC conversion circuit.

When the multifunctional car charger is in the discharging state and the electric vehicle is in a stop state, and if the alternating-current discharge demand instruction is received, whether the level of the low-voltage battery is less than the first preset value is determined, if the level of the low-voltage battery is less than the first preset value, the first DC/DC conversion circuit and the second DC/DC conversion circuit are controlled to charge the low-voltage battery through the power battery, and the bidirectional AC/DC conversion circuit is controlled to operate such that the power battery performs alternating-current discharge simultaneously through the first DC/DC conversion circuit and the bidirectional AC/DC conversion circuit; and if the level of the low-voltage battery is greater than or equal to the first preset value, the first DC/DC conversion circuit, the second DC/DC conversion circuit and the bidirectional AC/DC conversion circuit are controlled such that the power battery and the low-voltage battery simultaneously perform alternating-current discharge.

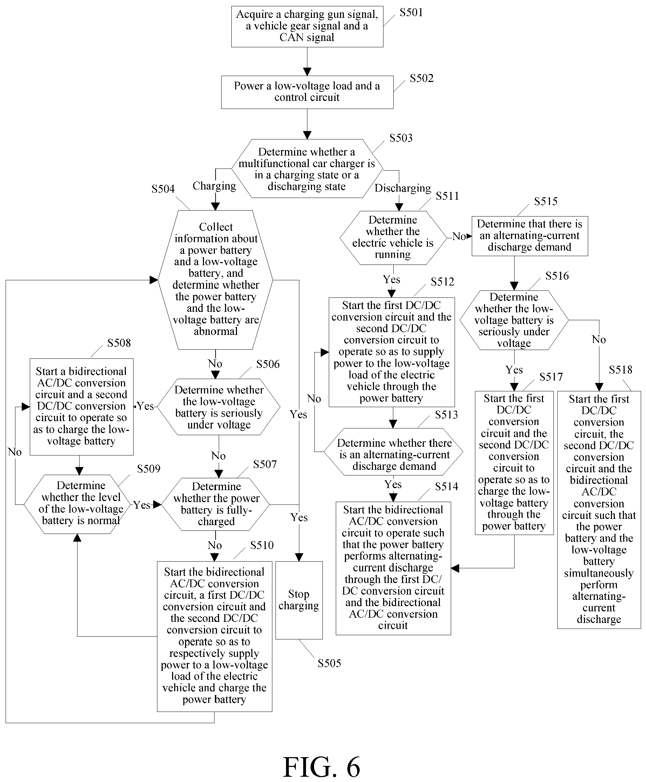

In one specific embodiment of the present invention, as shown in FIG. 6, the control method of the multifunctional car charger for an electric vehicle may include the following steps:

S501: Acquire a charging gun signal, a vehicle gear signal and a CAN signal, so as to determine whether charging is performed, whether the electric vehicle is in the running state and the like subsequently.

S502: Power the low-voltage load and the control circuit.

S503: Determine whether the multifunctional car charger is in a charging state or a discharging state. If it is in the charging state, go to step S504; and if it is in the discharging state, go to step S511.

S504: Acquire information of the power battery and the low-voltage battery, and determine whether the power battery and the low-voltage battery are abnormal. If yes, go to step S505; and if no, go to step S506.

S505: Stop charging.

S506: Determine whether the low-voltage battery is seriously under voltage. In the embodiment of the present invention, if the level of the low-voltage battery is less than the first preset value, it can be determined that the low-voltage battery is seriously under voltage. If yes, go to step S508; and if no, go to step S507.

S507: Determine whether the power battery is fully-charged. If yes, go to step S505; and if no, go to step S510.

S508: Start the bidirectional AC/DC conversion circuit and the second DC/DC conversion circuit to operate so as to charge the low-voltage battery, and go to step S509.

S509: Determine whether the level of the low-voltage battery is normal, that is, whether the level of the battery is sufficient. If yes, go to step S507; and if no, go back to step S508 to continue charging the low-voltage battery.

S510: Start the bidirectional AC/DC conversion circuit, the first DC/DC conversion circuit and the second DC/DC conversion circuit to operate so as to respectively supply power to a low-voltage load of the electric vehicle and charge the power battery. When the power is supplied to the low-voltage load, it is possible to go back to step S509 to determine whether the level of the low-voltage battery is normal, and go to step S508 to charge the low-voltage battery when the level of the low-voltage battery is insufficient. In addition, in the process of supplying power to the low-voltage load of the electric vehicle and charging the power battery, it is possible to go to step S504 in real time to determine whether the power battery and the low-voltage battery are abnormal.

S511: Determine whether the electric vehicle is running. If yes, go to step S512; and if no, go to step S515.

S512: Start the first DC/DC conversion circuit and the second DC/DC conversion circuit to operate so as to supply power to the low-voltage load of the electric vehicle through the power battery, and go to step S513.

S513: Determine whether there is an alternating-current discharge demand. If yes, go to step S514; and if no, go back to step S512.

S514: Start the bidirectional AC/DC conversion circuit to operate such that the power battery performs alternating-current discharge through the first DC/DC conversion circuit and the bidirectional AC/DC conversion circuit.

S515: Determine that there is an alternating-current discharge demand. When the electric vehicle is not running, the discharge process is generally alternating-current discharge.

S516: Determine whether the low-voltage battery is seriously under voltage. If yes, go to step S517; and if no, go to step S518.

S517: Start the first DC/DC conversion circuit and the second DC/DC conversion circuit to operate so as to charge the low-voltage battery through the power battery. At the same time, go to step S514 to perform alternating-current discharge.

S518: Start the first DC/DC conversion circuit, the second DC/DC conversion circuit and the bidirectional AC/DC conversion circuit such that the power battery and the low-voltage battery simultaneously perform alternating-current discharge. At this time, the power of the alternating-current discharge can reach the maximum value.

According to the control method of the multifunctional car charger for an electric vehicle of the embodiment of the present invention, the car charger integrates the bidirectional AC/DC conversion circuit, the first DC/DC conversion circuit and the second DC/DC conversion circuit, related voltage and current parameters in the car charger circuit are sampled, and the bidirectional AC/DC conversion circuit, the first DC/DC conversion circuit and the second DC/DC conversion circuit are controlled according to the related voltage and current parameters to realize multiple functions. In this way, through the highly integrated design, some circuits and ports can be multiplexed under different functions, so that the car charger is small in volume and weight, low in cost and capable of conveniently realizing multiple functions. In addition, based on the above control method, the charging and discharging efficiency of the car charger can be improved, the charging power can be expanded conveniently, the reliability of the car charger can be improved, and the service life of the car charger can be prolonged.

In the description of various embodiments, the term "coupling" is used. Coupling represents the interlinkage between two originally separate circuits or between two originally separate portions of a circuit, which may be direct or indirect. "Coupling" allows energy or signals to be transferred from one circuit to another or from one portion of the circuit to another. In this way, "coupling" in the present application will include, but is not limited to, a physical electrical connection and a communication linkage in the form of signal transmission. Specifically, for two equivalent two-port networks, the coupling between the ports of the two two-port networks may be that two terminals on one side of the first two-port network are electrically connected to two terminals on one side of the second two-port network respectively.

In the descriptions of the present invention, it should be understood that orientations or position relationships indicated by terms such as "central", "longitudinal", "lateral", "length", "width", "thickness", "on", "under", "front", "rear", "left", "right", "vertical", "horizontal", "top", "bottom", "inside", "outside", "clockwise" and "counterclockwise" are orientations or position relationships indicated based on the accompanying drawings, and are used only for ease of describing the present invention and of simplified descriptions rather than for indicating or implying that an apparatus or a component needs to have a particular orientation or needs to be constructed or operated in a particular orientation, and therefore, cannot be construed as a limitation to the present invention.

In addition, terms "first" and "second" are used only for describing objectives, and shall not be construed as indicating or implying relative importance or implying a quantity of indicated technical features. Therefore, a feature restricted by "first " or "second" may explicitly indicate or implicitly include at least one of such features. In the descriptions of the present invention, unless otherwise specified, "multiple" means two or more than two.

In the present invention, unless otherwise explicitly specified and defined, the terms "mounting", "linking", "connection", "fixing" and the like shall be understood broadly, and may be, for example, a fixed connection, a detachable connection or integration; may be a mechanical connection or an electrical connection; or may be a direct connection, an indirect connection through an intermediate medium, or an internal communication between two components or interaction between two components, unless otherwise explicitly defined. A person of ordinary skill in the art can understand specific meanings of the foregoing terms in the present invention according to a specific situation.

In the present invention, unless otherwise explicitly specified and defined, the first feature "on" or "under" the second feature may refers to a direct contact between the first and second features, or an indirect contact between the first and second features through an intermediate medium. Moreover, the first feature "over", "above" and "on the top of' the second feature may refers to that the first feature is directly above or obliquely above the second feature, or merely that the level of the first feature level is higher than that of the second feature. The first feature "under", "below" and "on the bottom of' the second feature may refers to that the first feature is directly below or obliquely below the second feature, or merely that the level of the first feature is lower than that of the second feature.

In the description of this specification, the description with reference to the terms "one embodiment", "some embodiments", "example", "specific example", or "some examples" and the like means that specific features, structures, materials, or characteristics described in connection with the embodiments or examples are included in at least one embodiment or example of the present invention. In this specification, the schematic representation of the above terms is not necessarily directed to the same embodiment or example. Furthermore, the particular features, structures, materials, or characteristics described may be combined in a suitable manner in any one or more embodiments or examples. In addition, various embodiments or examples described in this specification, as well as features of various embodiments or examples, may be combined and associated by those skilled in the art without contradicting each other.

While the embodiments of the present invention have been shown and described, it is understood that the above embodiments are illustrative and are not to be construed as limiting the present invention. Changes, modifications, replacements and variations of the above embodiments may be made by those skilled in the art within the scope of the present invention.

## Claims

1. A multifunctional car charger for an electric vehicle, comprising:
a bidirectional AC/DC conversion circuit, wherein an alternating-current end of the bidirectional AC/DC conversion circuit is configured for coupling to a power grid;
a first DC/DC conversion circuit, wherein a first direct-current end of the first DC/DC conversion circuit is coupled to a direct-current end of the bidirectional AC/DC conversion circuit, and a second direct-current end of the first DC/DC conversion circuit is configured for coupling to a power battery of the electric vehicle;
a second DC/DC conversion circuit, wherein a first direct-current end of the second DC/DC conversion circuit is respectively coupled to a direct-current end of the bidirectional AC/DC conversion circuit and the first direct-current end of the first DC/DC conversion circuit, and a second direct-current end of the second DC/DC conversion circuit is configured for coupling to a low-voltage battery of the electric vehicle;
a sampling circuit, wherein the sampling circuit is configured to sample a voltage and a current of the power grid, a voltage of the direct-current end of the bidirectional AC/DC conversion circuit, a voltage and a current of the power battery and a voltage and a current of the low-voltage battery respectively; and
a control module, in which a first control circuit for controlling the bidirectional AC/DC conversion circuit, a second control circuit for controlling the first DC/DC conversion circuit and a third control circuit for controlling the second DC/DC conversion circuit are integrated, wherein the control module is configured to correspondingly control the bidirectional AC/DC conversion circuit, the first DC/DC conversion circuit and the second DC/DC conversion circuit through the first control circuit, the second control circuit and the third control circuit according to the voltage and the current of the power grid, the voltage of the direct-current end of the bidirectional AC/DC conversion circuit, the voltage and the current of the power battery and the voltage and the current of the low-voltage battery that are sampled by the sampling circuit, to realize any one of a power battery charging function, a low-voltage battery charging function, a power battery alternating-current inversion function, a low-voltage battery alternating-current inversion function and a power battery low-voltage loaded output function.

2. The multifunctional car charger for an electric vehicle according to claim 1, wherein
the control module is further configured to correspondingly control the bidirectional AC/DC conversion circuit, the first DC/DC conversion circuit and the second DC/DC conversion circuit through the first control circuit, the second control circuit and the third control circuit according to the voltage and the current of the power grid, the voltage of the direct-current end of the bidirectional AC/DC conversion circuit, the voltage and the current of the power battery and the voltage and the current of the low-voltage battery that are sampled by the sampling circuit, to realize the power battery charging function and the low-voltage battery charging function, or the power battery alternating-current inversion function and the power battery low-voltage loaded output function, or the power battery alternating-current inversion function and the low-voltage battery alternating-current inversion function.

3. The multifunctional car charger for an electric vehicle according to claim 1 or 2, wherein the sampling circuit is integrated in the control module.

4. The multifunctional car charger for an electric vehicle according to claim 2, wherein the control module is further configured to, when the multifunctional car charger is in a charging state,
if the level of the low-voltage battery is less than a first preset value, control the bidirectional AC/DC conversion circuit and the second DC/DC conversion circuit to charge the low-voltage battery; and
if the level of the low-voltage battery is greater than or equal to the first preset value, when the power battery is in a not fully-charged state, control the bidirectional AC/DC conversion circuit, the first DC/DC conversion circuit and the second DC/DC conversion circuit to respectively supply power to a low-voltage load of the electric vehicle and charge the power battery.

5. The multifunctional car charger for an electric vehicle according to claim 4, wherein the control module is further configured to, when the multifunctional car charger is in a charging state, determine whether the power battery and the low-voltage battery are abnormal and control the multifunctional car charger to stop charging when the power battery and the low-voltage battery are abnormal.

6. The multifunctional car charger for an electric vehicle according to claim 2, wherein the control module is further configured to, when the multifunctional car charger is in a discharging state, determine whether the electric vehicle is in a running state, wherein
if the electric vehicle is in the running state, the control module controls the first DC/DC conversion circuit and the second DC/DC conversion circuit to supply power to the low-voltage load of the electric vehicle through the power battery, and controls the bidirectional AC/DC conversion circuit to operate when receiving an alternating-current discharge demand instruction such that the power battery performs alternating-current discharge simultaneously through the first DC/DC conversion circuit and the bidirectional AC/DC conversion circuit.

7. The multifunctional car charger for an electric vehicle according to claim 6, wherein the control module is further configured to, when the multifunctional car charger is in the discharging state and the electric vehicle is in a stop state, and if the alternating-current discharge demand instruction is received, determine whether the level of the low-voltage battery is less than the first preset value, wherein
if the level of the low-voltage battery is less than the first preset value, the control module controls the first DC/DC conversion circuit and the second DC/DC conversion circuit to charge the low-voltage battery through the power battery, and controls the bidirectional AC/DC conversion circuit to operate such that the power battery performs alternating-current discharge simultaneously through the first DC/DC conversion circuit and the bidirectional AC/DC conversion circuit; and
if the level of the low-voltage battery is greater than or equal to the first preset value, the control module controls the first DC/DC conversion circuit, the second DC/DC conversion circuit and the bidirectional AC/DC conversion circuit such that the power battery and the low-voltage battery simultaneously perform alternating-current discharge.

8. The multifunctional car charger for an electric vehicle according to any one of claims 1 to 7, wherein
the bidirectional AC/DC conversion circuit comprises a first bridge circuit, and the first bridge circuit comprises a first bridge arm and a second bridge arm connected in parallel; the first bridge arm comprises a first switch tube Q1 and a second switch tube Q2 connected in series as a source and a drain, and the second bridge arm comprises a third switch tube Q3 and a fourth switch tube Q4 connected in series as a source and a drain, wherein a node A1 between the first switch tube Q1 and the second switch tube Q2 and a node B1 between the third switch tube Q3 and the fourth switch tube Q4 serve as the alternating-current ends of the bidirectional AC/DC conversion circuit, and two end nodes E1 and D1 of the first bridge arm and the second bridge arm connected in parallel serve as the direct-current ends of the bidirectional AC/DC conversion circuit; and control electrodes of the switch tubes Q1-Q4 are coupled to the control module, and the control module controls the on-off state thereof.

9. The multifunctional car charger for an electric vehicle according to any one of claims 1 to 8, wherein
the first DC/DC conversion circuit comprises a second bridge circuit, a first transformer and a third bridge circuit connected in cascade, wherein the bridge arms of the second bridge circuit and the third bridge circuit comprise switch tubes Q5-Q12, control electrodes of the switch tubes Q5-Q12 are coupled to the control module, and the control module controls the on-off state thereof.

10. The multifunctional car charger for an electric vehicle according to any one of claims 1 to 9, wherein
the second DC/DC conversion circuit comprises a fourth bridge circuit, a second transformer and a fifth bridge circuit connected in cascade, wherein bridge arms of the fourth bridge circuit and the fifth bridge circuit comprise switch tubes Q13-Q18, control electrodes of the switch tubes Q13-Q18 are coupled to the control module, and the control module controls the on-off state thereof.

11. An electric vehicle, comprising the multifunctional car charger for an electric vehicle according to any one of claims 1 to 10.

12. A control method of a multifunctional car charger for an electric vehicle, wherein the multifunctional car charger for an electric vehicle comprises a bidirectional AC/DC conversion circuit, a first DC/DC conversion circuit and a second DC/DC conversion circuit, an alternating-current end of the bidirectional AC/DC conversion circuit is configured for coupling to a power grid, a first direct-current end of the first DC/DC conversion circuit is connected to a direct-current end of the bidirectional AC/DC conversion circuit, a second direct-current end of the first DC/DC conversion circuit is configured for coupling to a power battery of the electric vehicle, a first direct-current end of the second DC/DC conversion circuit is respectively coupled to a direct-current end of the bidirectional AC/DC conversion circuit and the first direct-current end of the first DC/DC conversion circuit, and a second direct-current end of the second DC/DC conversion circuit is configured for coupling to a low-voltage battery of the electric vehicle, the method comprising the following steps:
sampling a voltage and a current of the power grid, a voltage of the direct-current end of the bidirectional AC/DC conversion circuit, a voltage and a current of the power battery and a voltage and a current of the low-voltage battery respectively; and
controlling the bidirectional AC/DC conversion circuit, the first DC/DC conversion circuit and the second DC/DC conversion circuit according to the voltage and the current of the power grid, the voltage of the direct-current end of the bidirectional AC/DC conversion circuit, the voltage and the current of the power battery and the voltage and the current of the low-voltage battery that are sampled, to realize any one of a power battery charging function, a low-voltage battery charging function, a power battery alternating-current inversion function, a low-voltage battery alternating-current inversion function and a power battery low-voltage loaded output function.

13. The method according to claim 12, further comprising:
controlling the bidirectional AC/DC conversion circuit, the first DC/DC conversion circuit and the second DC/DC conversion circuit according to the voltage and the current of the power grid, the voltage of the direct-current end of the bidirectional AC/DC conversion circuit, the voltage and the current of the power battery and the voltage and the current of the low-voltage battery that are sampled, to realize the power battery charging function and the low-voltage battery charging function, or the power battery alternating-current inversion function and the power battery low-voltage loaded output function, or the power battery alternating-current inversion function and the low-voltage battery alternating-current inversion function.

14. The method according to claim 12 or 13, wherein when the multifunctional car charger is in a charging state,
if the level of the low-voltage battery is less than a first preset value, the bidirectional AC/DC conversion circuit and the second DC/DC conversion circuit are controlled to charge the low-voltage battery; and
if the level of the low-voltage battery is greater than or equal to the first preset value, and when the power battery is in a not fully-charged state, the bidirectional AC/DC conversion circuit, the first DC/DC conversion circuit and the second DC/DC conversion circuit are controlled to respectively supply power to a low-voltage load of the electric vehicle and charge the power battery.

15. The method according to claim 14, wherein when the multifunctional car charger is in a charging state, whether the power battery and the low-voltage battery are abnormal is determined and the multifunctional car charger is controlled to stop charging when the power battery and the low-voltage battery are abnormal.

16. The method according to claim 12 or 13, wherein when the multifunctional car charger is in a discharging state, whether the electric vehicle is in a running state is determined, wherein
if the electric vehicle is in the running state, the first DC/DC conversion circuit and the second DC/DC conversion circuit are controlled to supply power to the low-voltage load of the electric vehicle through the power battery, and the bidirectional AC/DC conversion circuit is controlled to operate when receiving an alternating-current discharge demand instruction such that the power battery performs alternating-current discharge simultaneously through the first DC/DC conversion circuit and the bidirectional AC/DC conversion circuit.

17. The method according to claim 16, wherein when the multifunctional car charger is in the discharging state and the electric vehicle is in a stop state, and if the alternating-current discharge demand instruction is received, whether the level of the low-voltage battery is less than the first preset value is determined, wherein
if the level of the low-voltage battery is less than the first preset value, the first DC/DC conversion circuit and the second DC/DC conversion circuit are controlled to charge the low-voltage battery through the power battery, and the bidirectional AC/DC conversion circuit is controlled to operate such that the power battery performs alternating-current discharge simultaneously through the first DC/DC conversion circuit and the bidirectional AC/DC conversion circuit; and
if the level of the low-voltage battery is greater than or equal to the first preset value, the first DC/DC conversion circuit, the second DC/DC conversion circuit and the bidirectional AC/DC conversion circuit are controlled such that the power battery and the low-voltage battery simultaneously perform alternating-current discharge.
